# EUROPEAN PATENT APPLICATION

(11) **EP 0 744 328 A1**
(43) Date of publication of application: **27.11.1996**
(21) Application number: 96108272.4
(22) Date of filing: 23.05.1996
(51) Int. Cl.: B60T 7/08

(54) **Release device for a handbrake lever of a motor vehicle**

(30) Priority: 26.05.1995 IT TO950421
(71) Applicant: FIAT AUTO S.p.A., 10135 Torino (IT)
(72) Inventor: Di Giusto, Nevio, 10100 Torino (IT)
(74) Representative: Plebani, Rinaldo

(57) **Abstract**

The handbrake lever (1) of a motor vehicle includes a stop (14) separated into two parts of which one is the wedge-shape stop itself, which engages between the teeth of the rack (36); the other part is constituted by a connection link pivoted both to the stop and to the brake lever; the stop-link assembly forms a toggle mechanism having a stable stop position slightly beyond the dead point, in which the relative rotation of the stop with respect to the link is impeded by the effect of the force of closure of the brake; the lever can be released by acting on a release push button (12) which by means of a transmission rod turns the link through a small angle with respect to the stop to pass beyond the dead point beyond which the same force of closure of the brake contributes to complete the release of the stop from the teeth of the rack.

## Description

The present invention relates to an improved release device for the handbrake of a motor vehicle; the release device according to the invention makes it possible to release the brake lever from the rack with a very much reduced force with respect to that necessary in conventional devices.

Known handbrake release devices currently in use on motor vehicles include a pawl pivoted to the brake control lever and terminating at one end with a wedge-shape corner disposed in such a way as to engage, with the corner, under the action of a spring, the grooves between the teeth of a ratchet concentric with the axis of rotation of the lever. Once the brakes have been applied the pawl wedges between two teeth and remains locked because of the force with which the brakes have been applied. To release the lever from the rack and to release the brakes, it is necessary to overcome the force of application so as to be able to extract the pawl from its locked position, and this operation requires the user to apply a considerable force. In fact, in known handbrake release devices the lever is provided with a push button or, alternatively, with a small lever connected directly to the pawl by means of a transmission rod; to remove the pawl from its locking position it is necessary to apply a considerable force on the push button or on the small lever to overcome the force of friction to which the pawl is subjected against one face of the tooth of the rack by the effect of the brake application force.

Therefore the main object of the present invention is that of providing a release device for the handbrake of a motor vehicle, which requires a limited force to release the control lever from the ratchet.

Another object of the present invention lies in the production of a release device for the handbrake, in which the release force is substantially independent of the brake application force and of the position along the ratchet reached by the pawl.

The said objects are achieved by the improved handbrake release device for a motor vehicle, which comprises a locking element connected to a control rod (2) of the said brake and cooperating with a fixed rack (36) to lock the control rod (2) to the rack by the action of a brake locking force, characterised by the fact that the locking element is divided into two parts (19; 22) pivotally connected together and relatively movable, the two parts being operable to release the control rod (2) from the rack.

This and other characteristics of the invention will become apparent more clearly from the following description of a preferred embodiment, given by way of non-limitative example with reference to the attached drawings, in which:
Figure 1 is a general side view of a handbrake control lever for a motor vehicle, including the release device according to the invention;
Figure 2 is an exploded view of the component elements of the release device for the lever of Figure 1;
Figure 3 represents the release device according to the invention in a locking position;
Figure 4 represents the release device of Figure 3 in a first release phase; and
Figure 5 represents the release device of Figure 4, in a final release position.

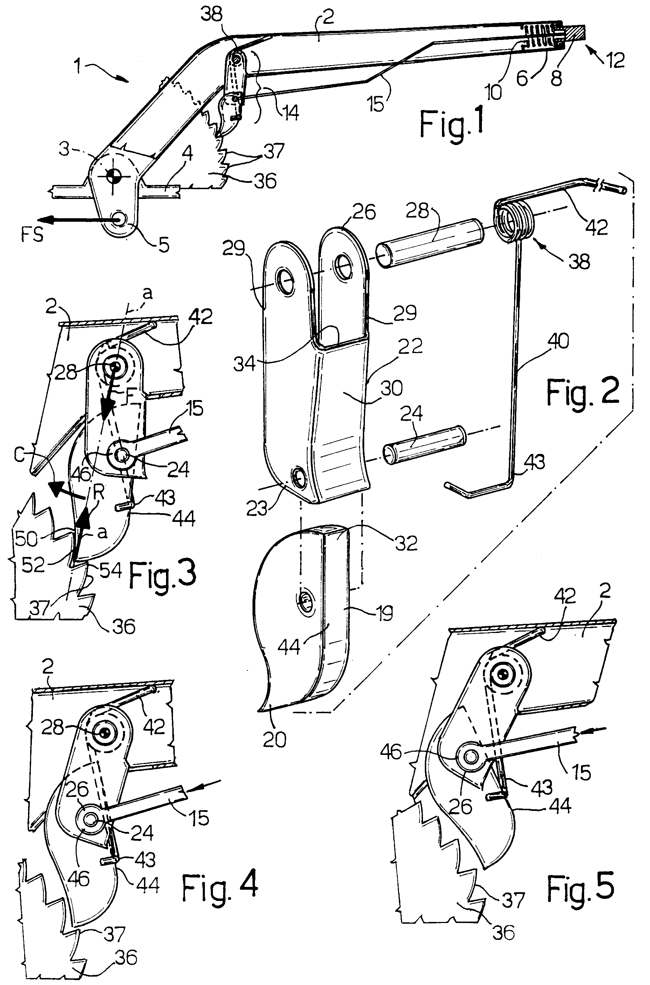

With reference to Figure 1, the reference numeral 1 generally indicates a control lever for a handbrake (not visible in the drawings) of a motor vehicle; the control member 1 is generally constituted by a control rod represented in Figure 1 by a lever 2, which is pivoted on a pin 3 of a support 4 of the motor vehicle structure; one end 5 of the control lever 2 is connected in a known way to the handbrake actuation members, not shown in the drawings in that they are known per se and outside the scope of the present invention; for clarity of explanation, in Figure 1 there has been indicated, with an arrow FS, the reaction applied to the lever 2 by the handbrake in brake-applied conditions; at an opposite end 6 of the lever 2 is disposed a lever release member for the lever 2 for releasing the brake, constituted by a push button 8 slidable in a seat formed in the end 6 of the lever 2; the push button 8 is maintained by a spring 10 in a rest position 12 projecting from the end of the lever 2 and is connected to a release device 14 by means of a transmission rod.

With reference to Figures 2 to 5, the release device 14 is constituted by two articulated parts which are relatively movable and pivoted to the lever 2; a first part of the device 14 is constituted by a locking member or stop 19, provided with a wedge shape end 20; a second part is constituted by a link 22 which at one end 23 is pivotally connected to the stop 19 by means of a first pin 24, and at the opposite end 26 is pivoted to the control lever 1 by means of a second pin 28; the link 22 is preferably made of pressed and folded sheet metal, folded to a bridge shape, and is constituted by two parallel side walls 29 joined together integrally by a spine wall 30 and traversed by pins 24 and 28; the stop 19 is provided with an end 32 diametrically opposite the wedge end 20 with respect to the pin 24 which is able to interfere with an interception portion 34 forming part of the spine of the link 22 such that the rotation of the stop 19 with respect to the link 22 is impeded in such a sense that the end 32 is forced against the portion 34, for example in the clockwise sense in Figures from 3 to 5; the wedge shape end 20 of the stop 19 is able to cooperate with a rack 36 (Figure 1) fixed to the structure of the motor vehicle and extending in an arc of a circle, concentrically with the axis of rotation of the lever 2 or rather of the pin 3; in a variant embodiment lying within the ambit of the present invention the lever 2 can be replaced by a slide movable linearly along a rectilinear rack; the rack 36 is provided with asymmetric teeth 37 inclined in the direction in which the lever 2 is rotated to apply the brake; by rotating the control lever 1 in the sense of the inclination of the teeth 37, the wedge shape end 20 rides over the crests of the teeth 37; on the other hand by rotating the lever 2 in the opposite sense from above the end 22 of the stop remains embedded between two teeth blocking the rotation of the lever 2; a resilient element 38 operatively fixed to the lever 2 tends to maintain the stop 19 turned in the sense in which its end 32 is engaged against the portion 34 of the link 22, which by the reaction to the torque applied to it by the stop 19 is turned in a clockwise sense (Figures from 3 to 5) in such a way as to maintain the wedge shape end 20 engaged against the teeth 37.

The resilient element 38 is constituted, in a preferred embodiment, by a resilient steel arm 40 of a spring partially wound about the pin 28 and having a first terminal arm 42 resiliently engaged against the control lever 2 and a second arm 43 extending into engagement against a side 44 of the stop 19 in a position situated beyond the pin 24 with respect to the end 32; in this way, as already indicated above, the arm 43 of the resilient element 38 maintains the stop 19 turned in such a way that its end 20 is maintained against the crests of the teeth 37 of the rack 36.

The transmission rod 15 (Figure 1) is connected to the release device 14 by means of an eye 46 at one end, pivoted to the pin 24 for connection between the link 22 and the stop 19.

The unit comprising the stop 19 and link 22 constitutes a toggle mechanism which exploits the reaction force upon application of the brake to release the lever 2 from the brake locking position on the rack 36 in which it is located when the brake has been applied; in fact, in the brake-application position, represented in Figure 3, the stop 19 is disposed with its end 32 engaged against the portion 34 of the link 22 by the action of the resilient element 38; in this position the line "a" joining the axis of the pin 28 to the end 20 of the stop 19, which is located wedged between two adjacent teeth 37, passes outside the axis of the pin 24 pivotally connecting the link and the stop, that is to say to its left; therefore the forces acting in this situation on the link and on the stop are the reaction F of the brake applied via the lever 2 to the link 22, passing through the axis of the pin 28, and the reaction R of the rack, equal and opposite to F, applied to the end 20 of the stop, both aligned along the line "a"; these forces produce a couple C which tends to cause the stop and the link to turn about the pin 24 in opposite senses with respect to one another, that is to say the stop 19 in a clockwise sense and the link 22 in the opposite sense; consequently the end 32 is further forced against the portion 34 of the link such that the unit comprising the link and the stop behaves as a rigid rod; it is therefore evident that, with suitable dimensions of the stop 19 and the link 22, the couple C can be reduced to a minimum value whilst still being sufficient to ensure that the stop is pressed against the link such that to release the locking of the lever 2 with respect to the rack 36 it is sufficient to apply to the pin 24 a small force such as to overcome the couple C.

Therefore, by acting with a light pressure on the push button 8 through the transmission rod 15 the couple C is easily overcome so that the stop 19 and the link 22 turn with respect to one another until they pass the dead point which occurs when (Figure 4) the pins 24 and 28 are aligned with the end 20; as soon as the dead point has been passed, the applied forces F and R produce a couple C1 (Figure 5) in the opposite sense to C, which accelerates the rotation of the stop 19 with respect to the link 22 by increasing values thereby contributing with increasing effectiveness to the release of the lever 2 from engagement with the rack 36.

The procedure of releasing the stop 19 from the teeth of the rack 36 is enormously encouraged by the rotation of the stop 19 in a anticlockwise sense after having passed the said dead point; in fact, as soon as the stop 19 starts to rotate (Figure 3) the terminal part 50 of its side rolls on the back 52 of the tooth next to the engaged tooth 54 facilitating sliding of the end 20 out of engagement with the tooth 54.

Therefore with the device according to the invention, the user can release the handbrake lever from the braking position with a small force in that it must only overcome the said couple C, whilst the more onerous function of overcoming the force of friction of the stop 19 against the surface of a tooth to disengage the stop 19, as takes place with currently available devices, is performed by the braking force F itself.

## Claims

1. An improved release device for a motor vehicle handbrake, comprising a locking element connected to a brake control rod and cooperating with a fixed rack to lock the said control rod to with respect to the said rack by the action of a brake-application force, characterised by the fact that the said locking element is divided into two parts (19; 22) articulated together and relatively movable, the said parts being operable to release the said control rod (2) from the said rack.

2. A release device according to Claim 1, characterised in that the said parts respectively comprise a link (22) pivoted on a pin (28) fixed to the said control rod (2) and a stop (19) rotatable on a pin (24) fixed to the said link (22) and having a first end (20) cooperating with the said rack.

3. A release device according to Claim 1 or Claim 2, characterised in that the said parts (22; 19) form a toggle mechanism having a dead point of unstable equilibrium and a stable equilibrium position adjacent to the said dead point, in which the said link (22) and the said stop (19) maintain the said control rod (2) locked on the said rack (36).

4. A release device according to Claim 2 or Claim 3, characterised in that the said rack (19) is provided with stop means (32; 34) cooperating with the said link (22) to prevent a further rotation of the said stop (19) in a given sense with respect to the said link (22).

5. A release device according to Claim 4, characterised in that the said stop means are constituted by an interception portion (34) of the said link (22) and a second end (32) of the said stop (19) opposite the said first end with respect to the said pin (24), which can be forced by the said braking force against the said interception portion (34) to maintain the said stop and the said link in the said stable equilibrium position, in which the said first end (20) is wedged between the teeth (37) of the said rack (36).

6. A release device according to Claim 4 or Claim 5, characterised in that the said equilibrium position is reached when a reaction (R) of the said rack (36) on the said stop (19) generates a couple (C) such as to turn the said stop with respect to the said link (22) in a sense such as to force the said end (32) against the said interception portion (34).

7. A release device according to any of Claims from 4 to 6, characterised in that the said stop (19) is maintained turned with respect to the said link (22) with the said second end (32) engaged against the said interception portion (34) by resilient means (38) acting between the said control rod (2) and the said stop (19).

8. A release device according to any of Claims from 3 to 7, characterised in that there are provided release means (8; 15) connected to the said link (22) and manually operable to displace the said stop (19) and the said link (22) from the said stable position beyond the said dead point to release the said control rod (2) from the said rack (36) independently of the said locking force.

9. A release device according to Claim 8, characterised in that the said release means include a thrust element (8) joined to a transmission rod (15) connected to the said pin (24).

10. A release device according to any preceding claim, characterised in that the said control rod (2) is constituted by a lever pivoted to a fixed pin (3) and in that the said rack (36) has a profile of an arc of a circle concentric with the said pin (3).

11. A release device according to any of Claims from 1 to 9, characterised by the fact that the said control rod (2) is constituted by a slide movable linearly along a rectilinear rack.
